# DEMANDE DE BREVET EUROPEEN

(11) **EP 1 170 850 A1**
(43) Date de publication de la demande: **09.01.2002**
(21) Numéro de dépôt: 01401717.2
(22) Date de dépôt: 28.06.2001
(51) Int. Cl.: H02K 19/10, H02K 19/12

(54) **Machine dynamo-électrique transversale à réluctance à effet Vernier susceptible de recevoir plusieurs dispositifs de polarisation rotorique**

(30) Priorité: 03.07.2000 FR 0008572
(71) Demandeur: KOEHLER, Gérard, F-92410 Ville-d'Avray (FR)
(72) Inventeur: KOEHLER, Gérard, F-92410 Ville-d'Avray (FR)
(74) Mandataire: Pontet, Bernard

(57) **Abrégé**

Des circuits magnétiques statoriques élémentaires polyphasés (4) disposés dans des plans successifs transversaux à la direction de déplacement **X** ont chacun deux bras terminés par deux pôles statoriques saillants à pas constant. Chaque circuit (4) d'un même des **g** groupes de circuits est excité en polarités alternées par une bobine statorique (13) alimentée par une des **q** phases d'un réseau polyphasé. Des pôles rotoriques à pas constant définissent des rangées d'entrefers avec les pôles statoriques correspondants. L'un au moins des nombres **q** et **g** est pair. Le rapport entre les pas des pôles statoriques et rotoriques est égal à **1+n/q**, où **n** est un nombre pair.

La différence n du nombre de pôles statoriques et rotoriques d'un groupe de phases a une valeur absolue de 2. Dans une même rangée d'entrefers, un pôle rotorique a un arc d'une longueur supérieure à celle d'un creux de denture entre pôles statoriques et supérieure à l'arc d'un pôle statorique. Les pôles statoriques ont un rapport cyclique de denture supérieur à la valeur 1/2. Les polarités alternées de courant alimentant une bobine (13) d'une phase ont une forme sensiblement en créneaux. L'extinction d'un courant d'une phase est synchronisée avec l'apparition d'un courant dans une autre phase. La machine comporte un dispositif de polarisation des pôles rotoriques.

Utilisation notamment pour la propulsion de véhicules.

## Description

La présente invention concerne une machine dynamo-électrique tournante à réluctance variable, à flux transversal, à effet Vernier, alimentée en courant alternatif. On connaît d'après le FR 2744855 une telle machine comprenant un stator et un rotor se déplaçant par rapport au stator selon une direction **X** de déplacement, le stator comportant un nombre **g** de groupes de circuits magnétiques statoriques élémentaires polyphasés qui sont disposés dans des plans transversaux à la direction de déplacement **X**, se succèdent dans la direction de déplacement **X** et ont chacun deux bras terminés par deux pôles statoriques saillants à pas constant, chaque circuit d'un groupe étant excité en polarités alternées par une bobine statorique alimentée par une des **q** phases d'un réseau polyphasé, le rotor comportant des circuits magnétiques rotoriques élémentaires comportant des pôles rotoriques à pas constant définissant chacun une rangée d'entrefers avec les pôles statoriques correspondants, l'un au moins des nombres **q** de phases par groupe et **g** de groupes étant pair, le rapport entre les pas des pôles statoriques et rotoriques étant égal à l'unité augmenté d'un nombre pair **n** lui même divisé par le nombre **q** de phases, soit **1+n/q** de façon à permettre la mise en place d'un dispositif de polarisation rotorique.

En passant de la disposition habituelle d'un flux parallèle à la direction **X** du déplacement, à une disposition d'un flux transversale à cette direction comme ci dessus, on apporte de nombreux avantages tels que:
- Diminution de la longueur du trajet du flux donc de la masse et des pertes fer.
- Augmentation du coefficient N²/R donc diminution de la masse et des pertes cuivre.
- Diminution de l'allongement des entrefers donc des effets de bord (franges).
- Espace disponible au centre de la machine permettant de loger un capteur de déplacement, un frein, un réducteur ou un plateau d'embrayage.
- Modularité d'une gamme de machines ayant des éléments communs.
- Automatisation plus poussée de la fabrication avec un grand nombre de petites pièces au lieu d'un petit nombre de grandes pièces spécifiques.

Dans le FR 2744855, le dispositif de polarisation rotorique est du type à aimants permanents.

Cette polarisation peut aussi être produite par des bobinages rotoriques individuels alimentés par des bagues et balais. Cependant une telle disposition entraîne des sujétions d'entretien et dans l'industrie on préfère les machines dites "brushless" (sans balais).

Le dispositif de polarisation rotorique par aimants permanents évite cette sujétion et l'apport d'ampèretours se fait sans perte Joule. Mais alors se posent des problèmes de défluxage en fonction de la vitesse, de risque de désaimantation, de stabilité en température, de fixation, de tolérances dimensionnelles ayant des répercussions sur les entrefers, de fragilité, de coût et de sécurité d'approvisionnement par quantités importantes et à flux tendu, ce qui limite le domaine d'application de ce dispositif.

Le but de la présente invention est de conserver les performances de ladite machine dynamo-électrique à flux transversal, à variation de réluctance, à effet Vernier et à excitation statorique à courants à polarités alternées et polyphasés, en proposant d'ajouter d'autres dispositifs de polarisation que celle à aimants permanents, tous étant applicables sur deux structures de réalisation.

L'invention vise aussi à diminuer l'encombrement de la machine, à prévoir des dispositifs de réfrigération, à proposer un dispositif d'alimentation permettant d'avoir une sécurité minimum de fonctionnement en cas d'incident et à adapter la machine pour la propulsion d'un véhicule.

Suivant l'invention, pour avoir un maximum de pôles statoriques simultanément actifs tout en ne produisant pas ou peu de couples antagonistes, dans une même rangée d'entrefers, un pôle rotorique a un arc d'une longueur supérieure à celle d'un creux de denture entre pôles statoriques et supérieure à l'arc d'un pôle statorique et les pôles statoriques ont un rapport cyclique de denture supérieur à la valeur 1/2.

Si le pas des pôles rotoriques est supérieur à celui des pôles statoriques, un arc d'un pôle rotorique a une longueur égale ou supérieure à celle d'un pas de denture statorique.

Pour faciliter ces condition, la différence **n** du nombre de pôles statoriques et rotoriques d'un groupe de phases a une valeur absolue de 2.

Les polarités alternées de courant alimentant une bobine d'une phase ont une forme sensiblement en créneaux et l'extinction d'un courant d'une phase est synchronisée avec l'apparition d'un courant dans une autre phase.

Après l'extinction d'un courant d'un circuit statorique encadrant une paire de pôles rotoriques, le dit circuit statorique est alimenté par un courant de sens inverse lorsqu'une paire précédente de pôles rotoriques dans le sens du déplacement est engagée sous le dit circuit statorique et de préférence lorsque le nombre de phases **q** est impair, à chaque instant une seule bobine des **q** phases de chaque groupe **g** de phases n'est pas alimentée en courant.

En l'absence d'aimants permanents, un premier dispositif de polarisation rotorique suivant l'invention est constitué par un bobinage en court-circuit disposé sur le trajet de flux de chaque pôle rotorique, de manière à être traversé par ledit flux induit par le stator.

Dans un deuxième dispositif de polarisation rotorique, les circuits magnétiques rotoriques élémentaires sont constitués par un alliage donnant une induction rémanente élevée de façon à provoquer un effet d'hystérésis. Cet alliage peut être composé en particulier de fer et de cobalt.

Dans une première structure de réalisation, les circuits magnétiques élémentaires sont constitués chacun par des tôles planes empilées dans la direction **X** et ont une forme en **E** avec un pôle central muni d'une bobine d'axe radial **Y** et deux pôles latéraux.

Dans une deuxième structure de réalisation, les circuits magnétiques élémentaires sont également constitués par des tôles planes empilées dans la direction **X** mais ils ont une forme en **U** avec au stator dans le fond de **l'U** une bobine d'axe de direction axiale **Z.**

Ces deux structures peuvent comporter l'un quelconque des dispositifs de polarisation.

D'autres particularités et avantages de l'invention, concernant la machine, des dispositifs de réfrigération et un dispositif d'alimentation, apparaîtront dans la description ci-après.

Aux dessins annexés, donnés à titre non limitatif:
la figure 1 est relative à une machine suivant la première structure et comporte un dispositif de polarisation par effet inductif sur un bobinage rotorique en court-circuit. Elle est une coupe partielle perpendiculaire à la direction axiale **Z**, suivant la ligne I-I de la figure 2;
la figure 2 est une coupe **II-II** de la figure 1 dans un plan radial **Y** passant par l'axe **Z;**
la figure 3 est une coupe cylindrique redressée suivant la ligne III-III de la figure 2;
la figure 4 est semblable à la figure 2 mais avec un rotor intérieur et deux bobinages rotoriques;
la figure 5 est un diagramme des déplacements successifs du rotor d'une machine semblable à celle de la figure 1, alimentée par des courants en forme de créneaux à 7 phases, après un double redressement de courbure;
la figure 6 est semblable à la figure 5, limitée à 2 états, mais avec un pas du rotor supérieur à celui du stator;
la figure 7 est relative à la deuxième structure et comporte un dispositif de polarisation par effet d'hystérésis. Elle est une coupe partielle décalée perpendiculaire à l'axe **Z;**
la figure 8 est une coupe **II-II** de la figure 7 dans un plan radial **Y** passant par l'axe **Z;**
la figure 9 est un diagramme des déplacements successifs du rotor de la machine de la figure 7 avec 6 phases;
la figure 10 est un diagramme des déplacements successifs du rotor d'une machine à effet d'hystérésis avec 5 phases et avec un pas du rotor supérieur à celui du stator;
la figure 11 est un diagramme des déplacements successifs du rotor d'une machine à 3 phases alimentée en triphasé sinusoïdal et avec un dispositif de polarisation par effet inductif;
la figure 12 représente un dispositif d'alimentations jumelées à chacune 5 phases;
la figure 13 est semblable à la figure 8 mais adaptée pour être alimentée par le dispositif de la figure 12, avec un dispositif de polarisation par effet inductif, et
la figure 14 représente un diagramme d'alimentation des phases de la figure 12.

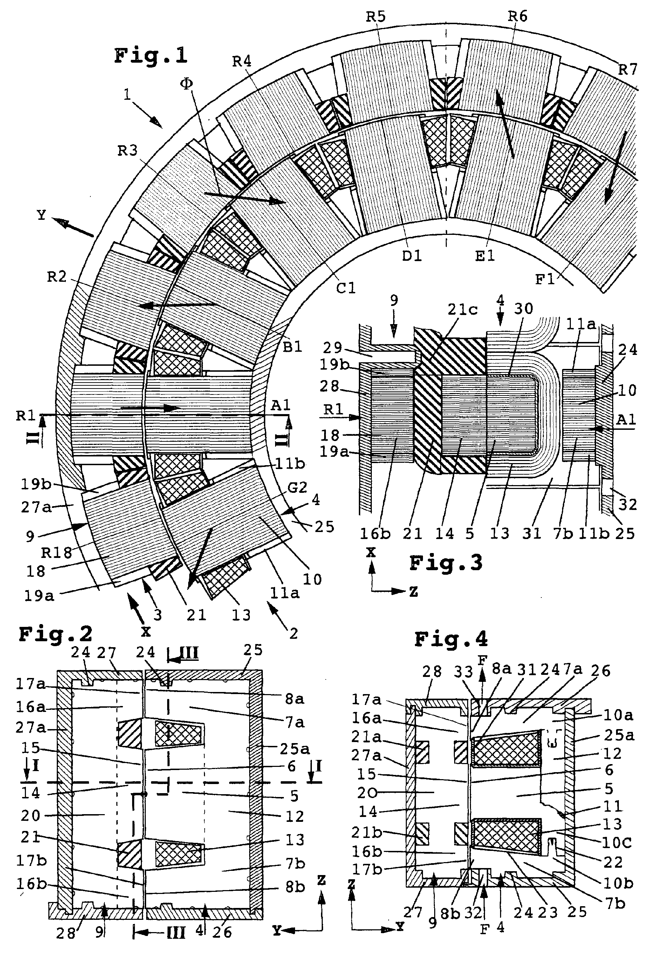

La figure 1 représente la machine 1 constituée par un circuit magnétique statorique 2 et par un circuit magnétique rotorique 3 créant entre eux des rangées d'entrefers disposées suivant un cylindre d'axe **Z** (non représenté). Le rotor est ici extérieur au stator.

Le circuit statorique 2 est constitué par un assemblage en couronne d'axe **Z** de circuits magnétiques statoriques élémentaires 4 au nombre de **g** groupes de **q** phases. Dans l'exemple représenté **g**=2 et **q**=7. Il y a donc quatorze circuits 4 de **A1** à **G1** et **A2** à **G2** repérés partiellement.

On a choisi un nombre élevé de phases de façon à augmenter le nombre d'à-coups de couples par tour et de façon à diminuer la différence relative entre les nombres de pôles statoriques et rotoriques, ce qui facilite une condition de recouvrement des pôles.

De plus le nombre **q** est impair pour ne pas avoir des couples synchrones dans un groupe de phases.

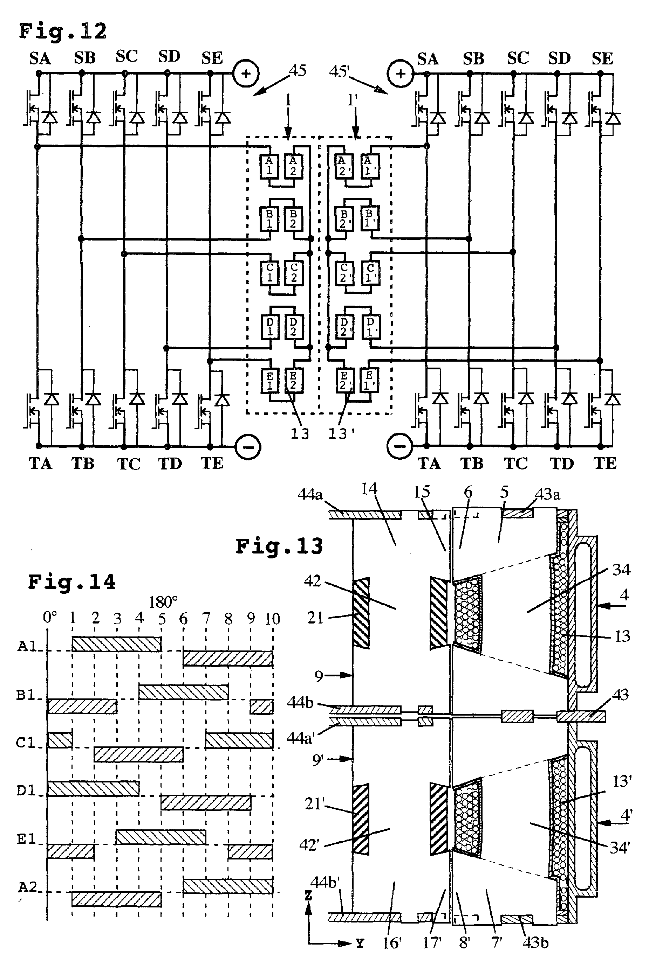

Le courant alimentant une bobine 13 d'une phase a une forme sensiblement en créneaux alternativement positifs et négatifs séparés ici les uns des autres par des coupures comme cela est visible sur la figure 14 et à chaque instant, à tour de rôle, une seule des bobines 13 des **q** phases de chaque groupe de phases n'est pas alimentée en courant (ici la bobine D1).

Sur la figure 2 on voit qu'un circuit 4 a une forme en **E** avec un bras central 5 terminé par un pôle central 6 et par deux bras latéraux 7a,7b terminés chacun par un pôle latéral 8a,8b. Ces pôles font face à des pôles de circuits magnétiques rotoriques élémentaires 9 également disposés en couronne en définissant respectivement trois rangées d'entrefers.

Comme on le voit sur la figure 3, le circuit 4 est constitué par un premier empilage intérieur 10 de tôles planes en forme de **E** d'épaisseur égale à celle du bras central 5 et par des deuxièmes empilages extérieurs 11a,11b en forme de **U** couvrant seulement les bras 7. Il en résulte qu'un pôle latéral 7b a une longueur dans la direction **X** plus grande que celle du bras central 5. Cependant son épaisseur dans la direction axiale **Z** est inférieure à la moitié de celle du bras 5 de façon que la surface des deux pôles 7a,7b soit sensiblement la même que celle du pôle 6. Le rapport cyclique de denture des pôles latéraux est donc plus élevé que celui des pôles centraux. Cette disposition permet de diminuer l'encombrement axial et radial de la machine et de diminuer le taux d'ondulation du couple en étalant les variations de réluctance. Les tôles forment en outre une barre 12 de jonction (figure 2) qui réunit les bras 7a,7b et 5.

Chaque bras central 5 est entouré par une bobine individuelle 13 excitée par une des 7 phases.

Les tôles des empilages dans la direction **X** sont calées les unes par rapport aux autres dans la direction radiale **Y** de façon à épouser le rayon d'entrefer des arcs polaires et sont immobilisées les unes par rapport aux autres par exemple par des liserés de soudure dans la direction d'empilage.

De même, le circuit rotorique 3 est constitué par un assemblage en couronne de circuits magnétiques rotoriques élémentaires 9 au nombre de 2(7+2)=18, donc supérieur au nombre de ceux du stator, repérés partiellement de **R1** à **R18.**

Ces circuits 9 ont chacun également une forme en **E** avec un bras central 14 terminé par un pôle central 15 et par deux bras latéraux 16a,16b terminés chacun par un pôle latéral 17a,17b.

Un circuit 9 est constitué par un premier empilage intérieur 18 de tôles planes en forme de E d'épaisseur supérieure à celle du bras statorique 5 et par des deuxièmes empilages extérieurs 19 en forme de **U** couvrant les bras 16 ainsi qu'une barre 20 de jonction des bras 14,16a et 16b. L'empilage 19 a une épaisseur qui permet de réduire la hauteur radiale de la barre 20.

Suivant le premier dispositif de polarisation des pôles rotoriques 15,17 de l'invention, le dispositif de polarisation est constitué par un bobinage en court-circuit (21) disposé sur le trajet du flux de chaque circuit magnétique rotorique élémentaire (9) de manière à être traversé par ledit flux induit par le stator. Dans une première disposition du bobinage rotorique suivant la figure 2, le bras central 14 est entouré par un bobinage en court-circuit 21 d'axe radial **Y**. Ce bobinage peut être constitué par des plaques découpées ou de préférence être moulé. Il y a ainsi un bon couplage entre les bobinages statoriques et rotoriques.

Comme dans le cas d'une machine asynchrone à induction, les bobinages rotoriques 21 d'un rotor 3 peuvent être tous coulés simultanément après mise en place des circuits rotoriques 9 composant ce rotor 3 en provoquant des liaisons 21c entre bobinages 21 angulairement voisins comme représenté en variante sur la partie supérieure de la figure 3.

Dans une deuxième disposition suivant la figure 4, deux bobinages en court-circuit 21a et 21b d'axe **Z** sont situés entre les pôles sur la barre 20, ce qui donne de la place pour augmenter l'arc polaire rotorique tout en diminuant la hauteur du circuit 9.

Le FR 2775393 comporte également un bobinage rotorique. Cependant ce bobinage n'est pas en court-circuit mais est alimenté par une tension variable à travers des bagues et balais de façon à permettre un défluxage d'aimants permanents à vitesse élevée. Il n'est donc pas soumis à un effet d'induction.

Sur les figures 1 et 2, le rotor 3 est extérieur comme pour un moteur-roue. Il résiste mieux à la force centrifuge et le diamètre d'entrefer est augmenté. Cette disposition permet aussi de donner une largeur croissante dans le sens axial pour chaque bras 5,7,14,16 depuis l'entrefer jusqu'à la base du pôle de façon à limiter la saturation aux zones d'entrefers.

Sur la figure 4, le rotor est intérieur et on voit que le premier empilage intérieur 10 d'un circuit statorique élémentaire 4 peut être constitué par un assemblage, au moyen de joints d'assemblage 22 au niveau de la barre de jonction 12, d'un empilage central 10c formant le bras central 5, avec deux empilages latéraux 10a,10b formant les bras latéraux 7a,7b tandis que des deuxièmes empilages extérieurs 11a,11b recouvrent les bras latéraux 7a,7b ainsi que les joints d'assemblage 22 en diminuant la réluctance de ces derniers.

Avec cette disposition de clips, on peut bobiner la bobine 13 directement sur le fer en améliorant le coefficient de remplissage de l'encoche. Cette dernière peut avoir une section trapézoïdale 23 si les deuxièmes empilages 11a,11b ont une section suffisante. La section 23 de la bobine correspond à celle imposée dans le plan perpendiculaire à l'axe **Z** par les circuits statoriques élémentaires 4 voisins.

Chaque circuit magnétique statorique élémentaire 4 comporte sur ses faces axiales terminales des encoches semi-cylindriques 24 venant s'emboîter dans des proéminences complémentaires de deux flasques 25, 26 en forme de disque d'axe **Z** constituant l'habillage extérieur de la machine.

La surface radiale d'un premier flasque 25 se prolonge perpendiculairement par un corps cylindrique 25a dont l'extrémité libre s'emmanche dans une rainure circulaire du deuxième flasque 26.

Le circuit magnétique rotorique est assemblé de la même manière avec des flasques 27,28.

Dans le cas d'un bobinage rotorique coulé, les flasques 27, 28 peuvent comporter des enfoncements 29 au droit de chaque liaison 21c de bobinages rotoriques voisins comme représenté sur la partie supérieure de la figure 3. De cette façon, ces bobinages peuvent être directement coulés à partir des zones d'entrefers dans l'assemblage des flasques 27, 28. De plus, dans ce cas, une encoche rotorique peut aussi avoir une section trapézoïdale avec un petit coté sur la zone d'entrefer. On évite ainsi un déboîtement du bobinage rotorique sous l'effet de la force centrifuge.

Sur les figures 3 et 4, on voit aussi que chaque bobine statorique 13 est bobinée sur une carcasse de bobine 30 comprenant des joues. La joue 31 située près d'un entrefer est prolongée de façon à former avec ses joues voisines une paroi s'étendant jusqu'aux flasques statoriques 25,26 de façon à ce qu'un flux d'air de refroidissement entrant par des ouvertures 32 d'un flasque 25, près des entrefers, soit conduit à contourner la surface des bobines voisines en passant par l'espace entre deux barres de jonction 12 pour atteindre des ouvertures 33 sur l'autre flasque 26.

Au moment de l'assemblage d'un bras 10a sur 10c, l'extrémité axiale d'une joue 31 peut s'engager sous un rebord du pôle 8a constitué par exemple par un épanouissement polaire.

Le bobinage peut aussi être réalisé en fil fin sans carcasse comme pour les machines à composition vectorielle ayant une entrée d'encoche réduite.

Une telle machine peut être utilisée dans le domaine des alterno-démarreurs de véhicule à moteur thermique à combustion interne.

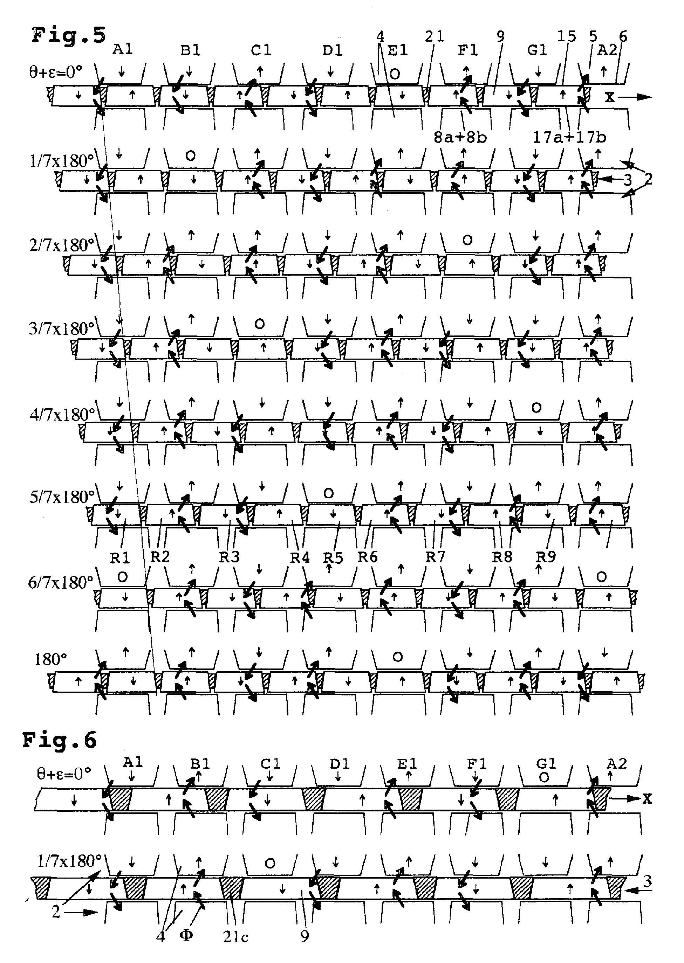

La figure 5 représente le diagramme de déplacement du rotor 3 en 8 étapes de 0° à 180°, en reprenant les dimensions des pôles des figures 1 à 3.

On a effectué un double redressement de courbure: sur le rayon d'entrefer et sur les arceaux réunissant deux entrefers. La surface du circuit mobile supérieure représente l'arc du pôle central 15 et celle du circuit inférieur représente la somme des arcs des pôles 17a et 17b.

Pour le stator 2, la barre 12 a été coupée en donnant un circuit fixe supérieur représentant l'arc du pôle central 6 et un circuit fixe inférieur représentant la somme des arcs des pôles latéraux 8a et 8b.

Pour pouvoir faire une modélisation, les extrémités de chaque phase de ces circuits doivent être réunies par une réluctance fictive nulle.

Sur chaque pôle statorique on a représenté par le signe 0 une absence d'excitation et par une flèche le sens d'excitation.

L'extinction d'un courant d'un circuit statorique 4 encadrant une paire de pôles rotoriques 15,17 est synchronisée avec l'apparition d'un courant dans une autre phase.

De plus, le dit circuit statorique 4 est à nouveau alimentée par un courant de sens inverse lorsqu'une paire précédente de pôles rotoriques 15,17, dans le sens du déplacement, est engagée sous le dit circuit statorique 4. Ainsi les sens d'excitation de deux pôles voisins sont opposés lorsque ces pôles attirent des pôles rotoriques voisins.

Sur chaque circuit magnétique rotorique élémentaire 9, une flèche représente la direction constante du flux induit par les circuits magnétiques statoriques élémentaires 4. Cette direction est inversée entre pôles voisins du fait des choix des nombres de pôles et des sens d'excitation. Ce flux fluctue entre une valeur maximum à la fin d'une position à entrefer fermé sous un pôle excité et une valeur minimum à l'approche d'un pôle qui va s'exciter.

La situation au temps 5/7 correspond sensiblement à la figure 1 où des flèches Φ représentent les flux d'attraction entre stator et rotor. R1 est en position à entrefers fermés en fin d'excitation. R2 n'est que sous B1 excité et est attiré par lui. De même pour R3 sous C1 excité mais il est aussi partiellement sous BI. Cependant les flux opposés de B1 et R3 ne provoquent sensiblement pas de couple antagoniste. De même pour les flux opposés de R4 et C1. R5 est sous D1 non-excité et seul son flux résiduel peut provoquer une légère force antagoniste jusqu'à l'arrivée de R4 sous D1 au temps 6/7. R6 est attiré par E1 excité. De même pour R7 sous F1. R8 est sensiblement dans le même état que R3 et enfin R9 n'est pas attiré, son flux résiduel étant opposé à celui de G1 comme pour R4. On a aussi un effet de basculement du flux sans constante de temps de R8 vers G1 qui vient d'être excité.

Les situations sont, à des décalages près, inchangées pour les autres temps.

Pour réaliser ces conditions, dans une même rangée d'entrefers, un pôle rotorique 15,17 a un arc d'une longueur supérieure à celle d'un creux de denture entre pôles statoriques 6,8 et supérieure à celle d'un pôle statorique 6,8 malgré le fait que dans le cas présent, le pas rotorique soit inférieur au pas statorique. Contrairement aux machines à réluctance pure, il est avantageux d'avoir un rapport cyclique de denture statorique supérieur à *0,5* pour diminuer le creux de denture.

Toutes les bobines des 7 phases sauf une procurent un couple d'attraction, les couples antagonistes de sortie de pôles excités étant faibles par suite de l'opposition des polarités.

On peut donc dire qu'on a crée une machine synchrone dite "brushless" dans laquelle une polarisation par un effet d'induction permet de ne pas avoir recours à des aimants permanents. L'effet Vernier reste indispensable pour assurer le démarrage. Contrairement à des machines à aimants permanents, au démarrage en charge, il n'y a pas à attendre la coïncidence de polarités d'aimant et d'excitation. Il n'y a pas non plus de problème de défluxage.

Sur la figure 6, pour également 7 pôles statoriques, il n'y a que 5 pôles rotoriques. Dans ce cas, un arc d'un pôle rotorique 15,17 a une longueur supérieure à celle d'un pas de denture statorique. De la sorte, un pôle rotorique peut se dégager d'un pôle statorique encore excité tel que D1 à 0° car il se trouve déjà attiré par le pôle statorique suivant tel que E1. L'obtention de cette condition est facilitée avec un rotor intérieur comme sur la figure 4, ce qui permet d'avoir un rapport cyclique de denture plus grand sans sacrifier la section de bobine.

Sur les deux états de déplacement représentés, on voit qu'on a le même principe de fonctionnement. Par rapport au cas précédent, il n'y a que 5 phases sur 7 simultanément actives, mais avec une vitesse de rotation plus élevée à fréquence donnée.

Sur les figures 5 et 6, on voit que l'espace entre deux circuits magnétiques rotoriques 9 voisins est occupé par la coulée 21c des bobinages rotoriques ayant une forme dite en "cage d'écureuil".

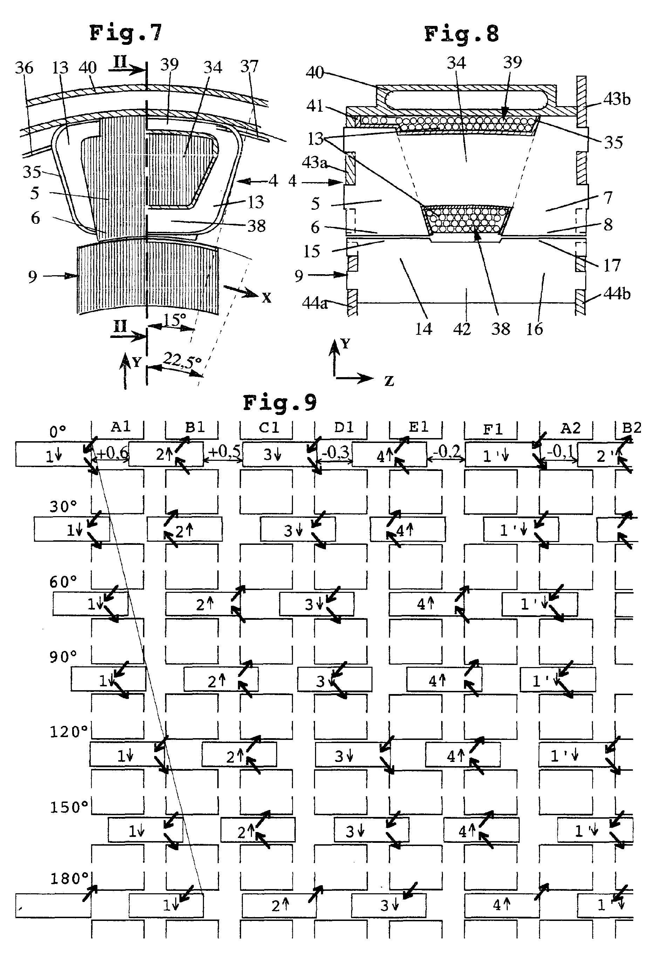

Sur les figures 7 et 8, un exemple de la deuxième structure de réalisation est représenté avec un rotor intérieur et avec 6 phases, 12 circuits statoriques 4 et 8 circuits rotoriques 9. La figure 7 est, sur la droite, une coupe axiale et, sur la gauche, une coupe axialement décalée, et limitée à une paire de circuits 4 et 9. Ces circuits sont constitués chacun par des tôles planes empilées dans la direction **X** et ont une forme en **U** avec au stator 4 deux bras 5,7 terminés chacun par un pôle 6,8 et avec un fond de **l'U** 34 entouré par la bobine 13 d'axe **Z** bobinée sur une carcasse de bobine 35 en deux parties encliquetées sur le fond 34 et ayant un fil d'entrée 36 et un fil de sortie 37. La bobine 13 est bobinée à fil tournant sur la carcasse 35, elle même animée d'un mouvement oscillant de façon à guider le fil alternativement d'une première section 38 d'une petite longueur axiale et d'une grande hauteur radiale à une deuxième section 39 plus éloignée de l'axe **Z** que la première, de sensiblement même surface mais d'une grande longueur axiale et d'une petite hauteur radiale de façon à utiliser au mieux le volume disponible. Avec un rotor extérieur, la section 39 serait plus proche de l'axe **Z.**

Le trajet du fil de bobinage ne rencontre pas d'angles vifs ce qui fait qu'au lieu d'avoir plusieurs fils fins en parallèle, on peut utiliser un gros fil. Avec une âme de la carcasse 35 proche d'un cercle, le coefficient N²/R est augmenté.

Ici, avec un stator extérieur, la deuxième section 39 opposée à l'entrefer est située à la périphérie cylindrique de la machine sur laquelle est glissée une structure cylindrique creuse 40 en matériau à bonne conductibilité thermique et comportant en son intérieur une circulation d'un liquide réfrigérant.

Après le bobinage d'une bobine telle que A1, son fil de sortie 37 n'est pas coupé mais est conduit successivement par des goulottes (41) aux circuits magnétiques élémentaires statoriques (4) ayant le même état d'excitation dans la même phase pour y servir à chacun de fil d'entrée (36) de bobinage, tels qu'ici la bobine D1 puis delà aux bobines A2 et D2 de l'autre groupe. Une goulotte 41 est formée par un prolongement d'une joue de la carcasse de bobine 35. Un point commun est réalisé à une extrémité des chapelets de quatre bobines et les autres extrémités sont connectées à trois bornes de raccordements extérieurs.

Chaque circuit 9 a également deux bras 14,16 terminés chacun par un pôle 15,17 et avec un fond 42 de l'**U**.

La découpe des tôles empilées fait apparaître latéralement des tenons hémisphériques prévus pour s'engager dans des flasques en forme de couronnes statoriques 43a,43b et rotoriques 44a,44b. A ce stade, on peut prévoir un surmoulage suivi d'une rectification des entrefers.

Suivant le deuxième dispositif de polarisation des pôles rotoriques 15,17, ce dispositif est constitué par l'emploi, pour les circuits magnétiques rotoriques élémentaires (9), d'un alliage donnant une induction rémanente élevée de façon à obtenir un effet d'hystérésis. Cet alliage peut être composé en particulier de fer et de cobalt. La rémanence élevée d'un tel matériau, telle que 1,3T, permet d'éviter d'avoir des forces antagonistes à l'ouverture des entrefers, tout au moins tant qu'on n'approche pas de la saturation dans les entrefers.

Au lieu d'avoir des tôles empilées, chaque circuit 9 peut être obtenu simplement par moulage du fait qu'il n'est soumis qu'à de faibles variations d'un flux unidirectionnel pour chaque fonctionnement continu.

Bien entendu cette deuxième structure de réalisation peut aussi recevoir un dispositif de polarisation par effet inductif avec des bobinages rotoriques 21 en court-circuit disposés dans la direction **Z** sur le fond 42, comme cela est visible sur la figure 13. Elle peut aussi recevoir le dispositif de polarisation par aimant permanent du FR 2744855. Réciproquement une machine conforme à la première structure comme celle de la figure 1 pourrait avoir une polarisation par hystérésis.

La figure 9 représente le diagramme, limité à 6 états, de déplacement de cette machine qui peut avoir une alimentation triphasée. Comme le nombre de phases est pair, dans un groupe de phases, il y a des couples synchrones qui augmentent le taux d'ondulation. Pour limiter ce défaut, les couronnes 44 comportent de légers décalages entre pôles rotoriques d'une même phase appartenant à des groupes différents et dans un même groupe, entre deux phases séparées par deux autres phases.

On voit qu'il y a 4 phases actives sur 6 avec une efficacité un peu inférieure à celle de la figure 6.

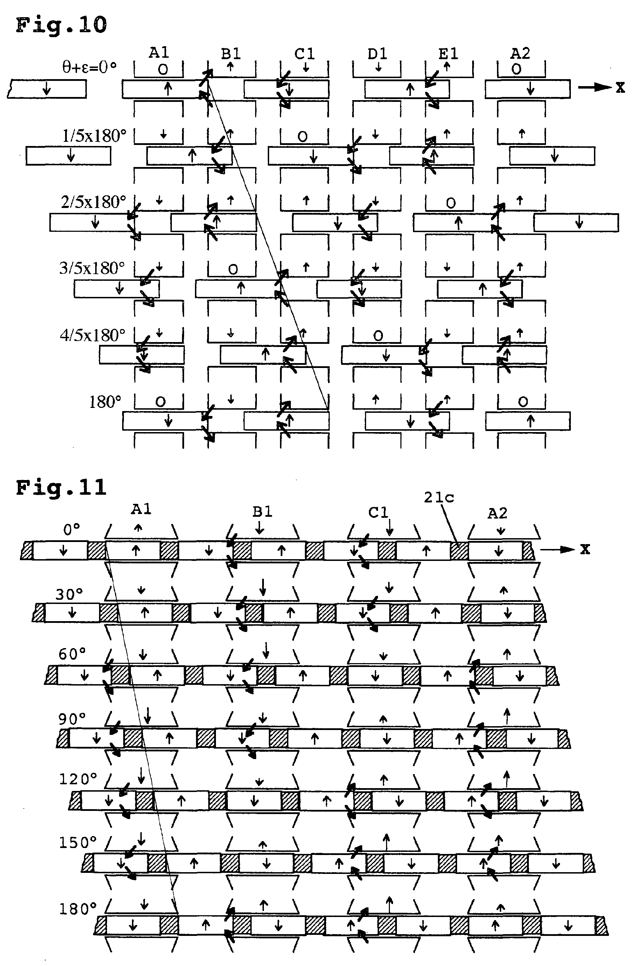

La figure 10 représente le cas de 5 pôles statoriques pour 3 pôles rotoriques avec un pas du rotor supérieur à celui du stator et une polarisation par effet d'hystérésis. Il n'y a plus que 3 pôles sur 5 simultanément actifs, ce qui montre l'intérêt d'avoir un grand nombre de phases. Avec une polarisation par effet inductif, la plus grande différence des pas à 5 phases nécessiterait des bobinages rotoriques individuels.

Sur la figure 11, l'alimentation est triphasée avec un courant sinusoïdal.

Le cas d'un seul pôle rotorique par groupe de phases étant défavorable, on a pris 5 pôles rotoriques. Pour qu'un arc rotorique soit supérieur à un creux de denture statorique, compte tenu du rapport de 3/5 des pas, on a épanoui l'arc statorique ce qui diminue l'induction dans l'entrefer. Dans chaque phase, on a représenté par des flèches plus ou moins longues l'état d'excitation statorique pour 7 états de 0 à 180°. Il y a 2 phases sur 3 simultanément actives. L'excitation peut être délivrée par une alimentation existante de moteur synchrone. Cependant une excitation par créneaux avec coupures donnerait une augmentation de couple de l'ordre de 16%.

D'une manière générale, l'alimentation des bobines statoriques 13 d'une machine peut être constituée par un pont de Graetz 45 comme représenté sur la figure 12 avec 5 phases. Cependant, pour avoir une sécurité minimum de fonctionnement en cas d'incident, on a disposé deux ponts de Graetz jumelés 45 et 45' alimentant chacun deux groupes de phases.

Sur la figure 13, on voit qu'à cet effet, la machine comprend une paire 4,4' de circuits magnétiques statoriques et une paire 9,9' de circuits magnétiques rotoriques dans la direction axiale **Z**, ici dans le cas de la deuxième structure de réalisation et avec le deuxième dispositif de polarisation rotorique par induction. Les bobines 13,13' de chaque paire sont alimentées respectivement par un des ponts ponts 45 et 45'.

Les circuits 4 et 4' sont disposés entre une couronne statorique centrale 43 et deux couronnes statoriques latérales 43a et 43b. Par contre les circuits 9 et 9' sont l'un disposé l'un entre des couronnes 44a et 44b et l'autre entre des couronnes 44a' et 45b' de façon à disposer de deux arbres moteurs indépendants. La commande des ponts 45,45' peut assurer un fonctionnement différentiel ou des rotations inverses permettant une manoeuvre dite de "Skidstering".

Les arbres de sortie peuvent aussi ne pas être alignés pour augmenter une garde au sol.

Une rotation de l'ensemble moteur permet d'avoir un essieu moteur directionnel.

Au point de vue de la sécurité minimale de fonctionnement, un défaut grave sur un pont 45 ou sur une demi-machine n'affectera ainsi que la moitié de la puissance.

D'autre part, si un défaut se produit sur les commutateurs d'une phase protégée ou sur une bobine d'une phase avec peu de risque d'extension à d'autres phases, la machine pourra continuer à fonctionner avec une puissance réduite de 10% seulement.

Les batteries d'accumulateurs peuvent aussi être fractionnées pour qu'en cas de court-circuit important il reste au moins une batterie en état.

Au contraire, dans une machine parallèle à composition vectorielle triphasée, un seul défaut sur une phase rend le fonctionnement impossible et le défaut se généralise facilement car les bobinages statoriques enchevêtrés constituent une masse sur toute la circonférence et sur toute la longueur axiale. De plus des court-circuits risqueraient de provoquer une désaimantation d'aimants permanents.

Le diagramme de la figure 14 indique les commutations à respecter dans le cas de la figure 10 avec la phase A non alimentée.

Bien entendu, des modifications peuvent être apportées aux descriptions ci-dessus sans sortir du domaine revendiqué. A titre d'exemple, si l'on veut privilégier le rendement en acceptant une augmentation de coût, on peut remplacer les tôles planes empilées dans la direction **X** par des tôles fines enroulées ou cambrées suivant des axes perpendiculaires à l'axe **Z**.

On peut aussi avoir une machine tournante à entrefers dans des plans perpendiculaires à l'axe de rotation suivant la disposition de la figure 7 du FR 2744855.

Le dispositif d'alimentation 45 peut aussi être d'un des types décrits dans les figures 3 à 5 du US 5 973 431.

## Revendications

1. Machine dynamo-électrique tournante à réluctance variable, à flux transversal, à effet Vernier comprenant un stator (2) et un rotor (3) se déplaçant par rapport au stator selon une direction **X** de déplacement, le stator comportant un nombre **g** de groupes de circuits magnétiques statoriques élémentaires polyphasés (4) qui sont disposés dans des plans transversaux à la direction de déplacement **X,** se succèdent dans la direction de déplacement **X** et ont chacun deux bras (5,7) terminés par deux pôles statoriques (6,8) saillants à pas constant, chaque circuit (4) d'un groupe **g** étant excité en polarités alternées par une bobine statorique (13) alimentée par une des **q** phases d'un réseau polyphasé, le rotor (3) comportant des circuits magnétiques rotoriques élémentaires (9) comportant des pôles rotoriques (15,17) à pas constant définissant chacun une rangée d'entrefers avec les pôles statoriques correspondants (6,8), l'un au moins des nombres **q** de phases par groupe et **g** de groupes étant pair, le rapport entre les pas des pôles statoriques (6,8) et rotoriques (15,17) étant égal à l'unité augmenté d'un nombre pair **n** lui même divisé par le nombre **q** de phases, soit **1+n/q**, **caractérisée en ce que** la différence **n** du nombre de pôles statoriques et rotoriques d'un groupe de phases a une valeur absolue de 2, **en ce que**, dans une même rangée d'entrefers, un pôle rotorique (15,17) a un arc d'une longueur supérieure à celle d'un creux de denture entre pôles statoriques (6,8) et supérieure à l'arc d'un pôle statorique (6,8), **en ce que** les pôles statoriques (6,8) ont un rapport cyclique de denture supérieur à la valeur 1/2, **en ce que** les polarités alternées de courant alimentant une bobine (13) d'une phase ont une forme sensiblement en créneaux, **en ce que** l'extinction d'un courant d'une phase est synchronisée avec l'apparition d'un courant dans une autre phase et **en ce que** la machine comporte un dispositif de polarisation des pôles rotoriques (15,17).

2. Machine selon la revendication 1, **caractérisée en ce que**, après l'extinction d'un courant d'un circuit statorique (4) encadrant une paire de pôles rotoriques (15,17), le dit circuit statorique (4) est alimenté par un courant de sens inverse lorsqu'une paire précédente de pôles rotoriques dans le sens du déplacement est engagée sous le dit circuit statorique (4).

3. Machine selon la revendication 2, dans laquelle le nombre **q** de phases est impair, **caractérisée en ce qu'**à chaque instant, une seule bobine (13) des **q** phases de chaque groupe **g** de phases n'est pas alimentée en courant.

4. Machine selon la revendication 2 ou 3, dans laquelle le pas des pôles rotoriques est supérieur à celui des pôles statoriques, **caractérisée en ce qu'**un arc d'un pôle rotorique (15,17) a une longueur égale ou supérieure à celle d'un pas de denture statorique.

5. Machine selon l'une quelconque des revendications précédentes, **caractérisée en ce que** l'un au moins des ensembles de circuits magnétiques élémentaires statoriques (4) et rotoriques (9) est constitués chacun par des tôles planes empilées dans la direction **X** et a une forme en **E** avec au stator (2) un bras central (5) entouré par la bobine (13) d'axe radial **Y** et terminé par un pôle central (6) et deux bras latéraux (7a,7b) terminés chacun par un pôle latéral (8a,8b) et au rotor (3) un bras central (14) terminé par un pôle central (15) et deux bras latéraux (16a,16b) terminés chacun par un pôle latéral (17a,17b).

6. Machine selon la revendication 5, **caractérisée en ce que** l'un au moins des ensembles des empilages statorique et rotorique comprend d'une part un premier empilage intérieur (10;18) de tôles dont les extrémités constituent le pôle central (6; 15) et les deux pôles latéraux (8a,8b;17a,17b) et d'autre part des deuxièmes empilages extérieurs (1 1a,11b;19a,19b) ne couvrant pas le bras central (5;14) mais couvrant les bras latéraux (7a,7b;16a,16b)

7. Machine selon la revendication 6, **caractérisée en ce que** le rapport cyclique de denture des pôles latéraux (8a,8b;17a,17b) est plus élevé que celui des pôles centraux (6;15).

8. Machine selon l'une quelconque des revendications 5 à 7, **caractérisée en ce que** les tôles des empilages sont calées les unes par rapport aux autres dans la direction radiale **Y** de façon à épouser le rayon d'entrefer des arcs polaires.

9. Machine selon l'une quelconque des revendications 5 à 8, **caractérisée en ce que** chaque bobine statorique (13) d'un bras central (5) est bobinée sur une carcasse de bobine (30) comprenant des joues (31), **en ce qu'**un flux d'air de refroidissement entre par des ouvertures (32) près des entrefers sur un flasque statorique (25) pour atteindre des ouvertures (33) sur l'autre flasque (26) et **en ce que** la joue (31) de chaque bobine, située près d'un entrefer, est prolongée de façon à former avec ses joues voisines une paroi s'étendant jusqu'aux flasques statoriques (25,26).

10. Machine selon l'une quelconque des revendications 1 à 4, **caractérisée en ce que** l'un au moins des ensembles de circuits magnétiques élémentaires statoriques (4) et rotoriques (9) est constitué par des tôles planes empilées dans la direction **X** et a une forme en **U** avec au stator (2) deux bras (5,7) terminés chacun par un pôle (6,8) et un fond de l'U (34) entouré par la bobine (13) d'axe **Z** ayant un fil d'entrée (36) et un fil de sortie (37) et au rotor (3) deux bras (14,16) terminés chacun par un pôle (15,17) et un fond de l'U (42)

11. Machine selon la revendication 10, **caractérisée en ce que** la bobine (13) est bobinée à fil tournant sur une carcasse (35) animée d'un mouvement oscillant de façon à guider le fil alternativement d'une première section (38) d'une petite longueur axiale et d'une grande hauteur radiale à une deuxième section (39), de sensiblement même surface mais de grande longueur axiale et d'une petite hauteur radiale.

12. Machine selon la revendication 11, **caractérisée en ce qu'**après le bobinage d'une bobine (13) d'une phase, son fil de sortie (37) n'est pas coupé mais est conduit successivement par des goulottes (41) aux circuits magnétiques élémentaires statoriques (4) ayant le même état d'excitation dans la même phase pour y servir à chacun de fil d'entrée (36) de bobinage.

13. Machine selon l'une quelconque des revendications 10 à 12, **caractérisée en ce que** la face cylindrique du stator (2) opposée à l'entrefer est recouverte par une structure cylindrique creuse (40) en matériau à bonne conductibilité thermique et comportant en son intérieur une circulation d'un liquide réfrigérant.

14. Machine selon l'une quelconque des revendications précédentes, **caractérisée en ce que** le dispositif de polarisation des pôles rotoriques (15,17) est constitué par l'emploi, pour les circuits magnétiques rotoriques élémentaires (9), d'un alliage donnant une induction rémanente élevée de façon à obtenir un effet d'hystérésis.

15. Machine selon la revendication 14, **caractérisée en ce que** chaque circuit magnétique rotorique élémentaire (9) est obtenu par moulage d'un alliage composé en particulier de fer et de cobalt.

16. Machine selon l'une quelconque des revendications 1 à 13, **caractérisée en ce que** le dispositif de polarisation des pôles rotoriques (15,17) est constitué par un bobinage en court-circuit (21) disposé sur le trajet du flux de chaque circuit magnétique rotorique élémentaire (9) de manière à être traversé par ledit flux induit par le stator.

17. Machine selon l'ensemble des revendications 5 et 16, **caractérisée en ce que** le bras central rotorique (14) est entouré par le bobinage rotorique en court-circuit (21).

18. Machine selon la revendication 17, **caractérisée en ce que** les bobinages rotoriques (21) d'un rotor (3) sont tous coulés simultanément après mise en place des circuits rotoriques (9) composant ce rotor (3) en provoquant des liaisons (21c) entre bobinages (21) angulairement voisins.

19. Machine selon l'ensemble des revendications 5 et 16, **caractérisée en ce que** chacune des deux liaisons magnétiques entre un bras central rotorique (14) et un bras latéral (16a,16b) est entourée par un bobinage rotorique en court-circuit (21a,21b).

20. Machine selon l'une quelconque des revendications précédentes, **caractérisée en ce que** l'alimentation de bobines statoriques (13) est constituée par deux ponts de Graetz jumelés (45,45'), **en ce que** la machine comprend dans la direction axiale **Z** une paire (4,4') de circuits magnétiques statoriques et une paire (9,9') de circuits magnétiques rotoriques et **en ce que** les bobines (13,13') de chaque paire (4,4') sont alimentées respectivement par un des ponts jumelés (45,45').

21. Machine selon la revendication 20, **caractérisée en ce que** les circuits statoriques (4,4') sont disposés entre une couronne statorique centrale (43) et deux couronnes statoriques latérales (43a,43b) et **en ce que** les circuits rotoriques (9,9') sont disposés l'un entre des couronnes rotoriques (44a,44b) et l'autre entre d'autres couronnes (44a',44b') de façon à disposer de deux arbres moteurs indépendants.
